# EUROPÄISCHE PATENTSCHRIFT

(11) **EP 3 258 237 B1**
(45) Veröffentlichungstag und Bekanntmachung des Hinweises auf die Patenterteilung: **28.07.2021**
(21) Anmeldenummer: 17175662.0
(22) Anmeldetag: 13.06.2017
(51) Int. Cl.: B61L 3/22, B61L 23/04, G01M 17/007, B61L 25/02, B61L 27/00

(54) **VERFAHREN ZUR CHARAKTERISIERUNG EINES FAHRZEUGS**
METHOD FOR CHARACTERISING A VEHICLE
PROCÉDÉ DE CARACTÉRISATION D'UN VÉHICULE

(30) Priorität: 15.06.2016 AT 505462016
(43) Veröffentlichungstag der Anmeldung: 20.12.2017
(73) Patentinhaber: AIT Austrian Institute of Technology GmbH, 1220 Wien (AT)
(72) Erfinder: WIESMEYR, Christoph, 1020 Wien (AT); GARN, Heinrich, 1220 Wien (AT); LITZENBERGER, Martin, 2460 Bruck an der Leitha (AT)
(74) Vertreter: Wildhack & Jellinek

(56) Entgegenhaltungen:
- WO-A1-2012/152575
- WO-A1-2013/114128

## Beschreibung

Die Erfindung betrifft ein Verfahren zur Bestimmung einer charakteristischen Funktion für ein sich entlang eines Fahrtwegs bewegenden Fahrzeugs gemäß dem Patentanspruch 1. Unter einem Fahrzeug werden im Zusammenhang mit der Erfindung alle Landfahrzeuge, insbesondere auch Schienenfahrzeuge und Straßenfahrzeuge angesehen.

Aus der WO 2012/152575 A1 ist ein Verfahren zum Monitoring von Gleisen mittels entlang der Gleise verlegter Glasfaserkabel und Optical Time Domain Reflektometrie bekannt, bei dem die für das jeweils untersuchte Gleis ermittelten Messwerte einer von mehreren Klassen zugeordnet werden, die den Zustand des Gleises beschreiben.

Aus der WO 2013/114128 A1 sind ein Verfahren und eine Vorrichtung zur Bestimmung einer interessierenden Position in einem Verkehrsnetz bekannt, bei denen z.B. Unfälle oder Bauarbeiten in dem Verkehrsnetz mittels akustischer Signalquellen an diesen Positionen, die mittels Distributed Acoustic Sensing und einem entlang des Verkehrsnetzes verlegten Glasfaserkabel lokalisiert werden.

Aus dem Stand der Technik ist es bekannt, mittels OTDR (Optical Time Domain Reflektometrie) in Ort und Zeit aufgelöste Messwerte aufzunehmen, die angeben, ob an bestimmten Punkten Druckänderungen bzw. Vibrationen (Luftschall, Bodenschall) vorhanden sind. Im konkreten Fall wird zur Bestimmung der Drücke eine optische Faser, beispielsweise ein Glasfaserkabel, verwendet, wobei Brechungsindexänderungen, die von Druckänderungen oder Vibrationen abhängig sind, dadurch gemessen werden können, dass das Reflexionsverhalten eines Lichtimpulses, der in das Glasfaserkabel eingeleitet wird, von den einzelnen Druckänderungen abhängt. Wird ein solches Glasfaserkabel im Bereich der Fahrtstrecke eines Fahrzeugs verlegt, können vor allem dessen abgegebene akustische Schwingungen gemessen werden, da solche Vibrationen und Schwingungen Druckänderungen im Bereich des Glasfaserkabels erzeugen, was wiederum zu einer lokalen Änderung des Brechungsindex des Glasfaserkabels führt. Damit besteht letztlich die Möglichkeit, dass das Glasfaserkabel einen lang gestreckten akustischen Sensor darstellt, mit dem Messwerte zur Charakterisierungen von Vibrationen oder Druckänderungen an einer Vielzahl von Wegpunkten bestimmt werden, die entlang eines Fahrtwegs eines Fahrzeugs angeordnet sind. Das so erhaltene Signal stellt ein örtlich verteiltes Mikrofonsignal dar, das für eine Vielzahl von Ortspunkten (M₁ ... M₁₀₀) erfasst werden kann.

Gerade bei Verkehrsinfrastruktur besteht der wesentliche Vorteil, dass für die betriebsbedingt erforderlichen Kommunikationsanwendungen ohnehin Kabel in Form von Glasfaserkabeln verlegt sind. Dabei sind in einem Glasfaserbündel regelmäßig auch mehrere unbenutzte Glasfasern enthalten, die für OTDR-Messungen verwendet werden können. Diese Messungen erfassen die von Fahrzeugen abgegebenen Druckänderungen oder akustischen Schwingungen in Raum und Zeit.

Aufgabe der Erfindung ist es, ein konkretes Verfahren zur Verfügung zu stellen, mit dem ein charakteristisches Signal erstellt werden kann, das konkrete Eigenschaften eines Fahrzeugs wiederspiegelt und zur Analyse und Wiedererkennung eines Fahrzeugs herangezogen werden kann.

Ein numerisch wenig aufwendiges und vorteilhaftes Verfahren zur Bestimmung eines charakteristischen Signals für ein sich entlang eines Fahrtwegs bewegendes Fahrzeug gemäß Anspruch 1 sieht vor, dass
a) entlang des Fahrtwegs mittels eines langgestreckten akustischen Sensors in Form eines Glasfaserkabels, das entlang des Fahrtwegs liegt und von den vom Fahrtweg ausgehenden Erschütterungen betroffen ist, Messwerte zur Charakterisierung von Vibrationen oder Druckänderungen an einer Vielzahl von entlang des Fahrtwegs angeordneten Ortspunkten bestimmt werden,
   wobei zu vorgegebenen Zeitpunkten
   - jeweils ein Lichtimpuls in das Glasfaserkabel abgegeben wird,
   - das aus dem Glasfaserkabel zurückkehrende Licht gemessen wird, wobei entsprechend der zeitlichen Verzögerung des zurückkehrenden Lichts das Signal einem Ortspunkt entlang des Fahrtwegs zugeordnet wird, und
   - wobei die Stärke oder Phase des zurückkehrenden Lichts als Messwert zur Charakterisierung von Vibrationen oder Druckänderungen im betreffenden Ortspunkt herangezogen wird,
b) wobei für eine Anzahl von Ortspunkten entlang des Fahrtwegs und für eine Anzahl von Zeitpunkten basierend auf der Stärke oder Phase des gemessenen, zurückkehrenden Lichts jeweils ein Messwert zur Charakterisierung der Vibration oder einer Druckänderung zur Verfügung gestellt wird,
c) wobei eine Trajektorie des Fahrzeugs in Bezug auf die Wegpunkte in der Zeit ermittelt oder vorgegeben wird, wobei die Trajektorie den Ortspunkt eines vorgegebenen Teils des Fahrzeugs zu jedem Zeitpunkt innerhalb eines Zeitbereichs angibt,
d) wobei für Ortspunkte jeweils separat im Bereich des Fahrzeugs bzw. dessen Trajektorie im jeweiligen Ortspunkt eine Anzahl von Zeitfenstern vorgegeben wird, in jedem der Zeitfenster des Ortspunkts separat jeweils die Signalenergie innerhalb eines vorgegebenen Frequenzbands ermittelt wird, und diese Signalenergie einem dem Zeitfenster zugeordneten Zeitpunkt zugewiesen wird, sodass ein diskretes Signal jedem Ortspunkt für einzelne Zeitpunkte die zugehörigen Signalenergien zuordnet, zur Verfügung steht,
e) die einzelnen Werte des diskreten Signals entsprechend der Trajektorie des Fahrzeugs derart einander zugeordnet werden, und gegebenenfalls entzerrt und interpoliert, werden, dass die von gleichen Teilen des Fahrzeugs ausgehenden Werte aus dem diskreten Signal einander zugeordnet werden,
f) wobei die einzelnen einander zugeordneten, insbesondere gegeneinander verschobenen und gegebenenfalls entzerrten und interpolierten, Werte des diskreten Signals, gegebenenfalls gewichtet, über die Zeit und/oder über den Ort aggregiert, insbesondere summiert, werden, und derart ein charakteristisches Signal ermittelt wird, das als charakteristisch für das Fahrzeug angesehen wird.

Eine besonders einfache Art der Bildung eines charakteristischen Signals sieht vor, dass zur Bestimmung des charakteristischen Signals aus dem diskreten Signal für jeden Zeitpunkt jeweils ein separates diskretes Ortssignal entnommen wird, die einzelnen diskreten Ortssignale entsprechend der Trajektorie derart verschoben werden, dass von gleichen Teilen des Fahrzeugs herrührende Signalanteile jeweils auf derselben Ortsposition zu liegen kommen, und die derart verschobenen Ortssignale ortspunktweise aggregiert werden.

Alternativ kann zur Bestimmung eines charakteristischen Signals, insbesondere für gleichmäßig bewegte Fahrzeuge, vorgesehen sein, dass zur Bestimmung des charakteristischen Signals aus dem diskreten Signal für jeden Ortspunkt jeweils ein separates diskretes Zeitsignal entnommen wird, die einzelnen diskreten Zeitsignale entsprechend der Trajektorie derart verschoben und gegebenenfalls entzerrt werden, dass von gleichen Teilen des Fahrzeugs herrührende Signalanteile jeweils auf denselben Zeitpunkt fallen und die derart verschobenen Zeitsignale zeitpunktweise aggregiert werden und das so erhaltene Ergebnis als charakteristisches Signal herangezogen wird.

Vorteilhafterweise kann bei beschleunigten oder verzögerten Fahrzeugen vorgesehen sein, dass die einzelnen Zeitsignale vor der Aggregation bei Vorliegen von Beschleunigungen und Verzögerungen des Fahrzeugs in der Trajektorie entzerrt werden, sodass von gleichen Teilen des Fahrzeugs herrührende Signalanteile jeweils auf denselben Zeitpunkt fallen.

Eine besonders vorteilhafte Messung mittels des OTDR-Verfahrens sieht vor, dass die diskreten Signale entsprechend der Trajektorie des Fahrzeugs derart gegeneinander verschoben werden, dass sich die Fensterstützpunkte bzw. Stützpunkte des jeweiligen Zeitfensters an diskreten äquidistanten und in jedem Ortskanal gleich festgelegten Zeiten befinden, und zur Verschiebung entsprechend der Trajektorie die diskreten Zeitsignale nur um ganzzahlige Vielfache des Abstands dieser Zeiten verschoben werden, oder die einzelnen Ortskanäle interpoliert und anschließend verschoben werden. Alternativ kann auch vorgesehen sein die einzelnen Ortskanäle zu interpolieren und anschließend zu verschieben.

Eine besonders vorteilhafte Messung mittels des OTDR-Verfahrens sieht vor, dass die Lichtimpulse mit einer Frequenz zwischen 100 Hz und 10 kHz in das Glasfaserkabel abgegeben werden.

Bevorzugt kann vorgesehen sein, dass zur Ermittlung der Trajektorie des Anfangs des Fahrzeugs am Fahrtweg für eine Anzahl von Ortskanälen jeweils die Signalenergien in einer Mehrzahl von Zeitpunkten innerhalb eines bestimmten Zeitbereichs innerhalb eines bestimmten Frequenzbands oder mehrerer bestimmter Frequenzbänder ermittelt werden und dass die Trajektorie innerhalb eines Zeitbereichs und eines Ortskanals liegend festgestellt wird, wenn die ermittelte Signalenergie oder die ermittelten Signalenergien vorgegebenen Kriterien entsprechen, insbesondere, dass die ermittelte Signalenergie einen vorgegebenen Schwellenwert überschreitet, wobei insbesondere die Trajektorie des Anfangs oder des Endes des Fahrzeugs ermittelt wird, indem für jeden Ortskanal der jeweils früheste oder späteste Zeitpunkt ermittelt wird, in dem die Signalenergie einen vorgegebenen Schwellenwert überschreitet oder unterschreitet.

Die Genauigkeit der Bestimmung der Trajektorie des Fahrzeugs aus den ermittelten Messwerten wird verbessert, indem vor der Bestimmung der Signalenergie innerhalb eines Fensters die Messwerte innerhalb dieses Fensters einzeln mit vorgegebenen Gewichtswerten gewichtet werden.

Die Feststellung von kritischen Zuständen erfolgt besonders einfach, indem für dasselbe Fahrzeug an mehreren Stellen entlang des Fahrtwegs gemäß den Schritten a) bis f) jeweils ein charakteristisches Signal ermittelt wird, die charakteristischen Signale miteinander verglichen werden, wobei ein Übereinstimmungswert ermittelt wird, der angibt, wie gut die beiden charakteristischen Signale miteinander übereinstimmen, und für den Fall, dass die durch den Übereinstimmungswert indizierte Übereinstimmung einen vorgegebenen Schwellenwert unterschreitet, eine kritische Veränderung des Fahrzeugs festgestellt und gegebenenfalls angezeigt oder signalisiert wird.

Eine besonders rasche Erstellung von charakteristischen Signalen mit für den Vergleich ausreichender Aussagekraft sieht vor, dass für die Bestimmung eines charakteristischen Signals jeweils Messwerte herangezogen werden, die innerhalb eines Zeitbereichs von weniger als 20 Sekunden, insbesondere von weniger als 2 Sekunden, aufgenommen wurden.

Eine rasche Detektion von kritischen Zuständen sieht vor, dass charakteristische Signale laufend, insbesondere in Zeitintervallen von zwischen 0,5 und 10 Sekunden erstellt werden und/oder dass Vergleiche zwischen charakteristischen Signalen vorgenommen werden, die innerhalb von weniger als 10 Sekunden erstellt wurden.

Zur vorteilhaften Detektion des Verlusts von Anhängern kann vorgesehen sein, dass für das gesamte Fahrzeug ein einziges charakteristisches Signal zu einem Zeitpunkt ermittelt wird, zu dem das Fahrzeug intakt ist und seinen Normalzustand mit einer Zugmaschine und einem Anhänger aufweist, und dass für den Fall, dass sich das charakteristische Signal des Fahrzeugs zu einem späteren Zeitpunkt in zwei voneinander getrennte Signale aufteilt, der Verlust des Anhängers festgestellt wird.

Ebenso kann zur Detektion des Verlusts von Anhängern vorgesehen sein, dass für die Zugmaschine und den Anhänger jeweils separate charakteristische Signale ermittelt werden, wobei gegenüber jedem der charakteristischen Signale jeweils eine Referenzposition festgelegt wird, dass der Abstand zwischen der Referenzposition des charakteristischen Signals der Zugmaschine zur Referenzposition des charakteristischen Signals des Anhängers zu einem Zeitpunkt ermittelt als Referenzabstand wird, zu dem das Fahrzeug intakt ist, und dass der Abstand zu einem späteren Zeitpunkt erneut ermittelt wird, und für den Fall, dass der Abstand einen vorgegebenen Schwellenwert, insbesondere mehr als 110% des Referenzabstands, überschreitet, der Verlust des Anhängers festgestellt wird.

Zur Wiedererkennung von Fahrzeugen auf Straßen kann vorteilhaft vorgesehen sein, dass an unterschiedlichen Orten und/oder zu unterschiedlichen Zeiten die charakteristischen Signale unterschiedlicher Fahrzeuge nach einem der vorangehenden Ansprüche ermittelt werden und in einer Datenbank abgespeichert werden, dass für den Fall, dass zu einem späteren Zeitpunkt neuerlich ein charakteristisches Signal eines Fahrzeugs ermittelt wird, dieses charakteristische Signal mit den in der Datenbank abgespeicherten charakteristischen Signalen verglichen wird, und dass für den Fall, dass der Vergleich eine Übereinstimmung zwischen dem neuerlich ermittelten charakteristischen Signal und einem abgespeicherten charakteristischen Signal ergibt, festgestellt wird, dass die beiden charakteristischen Signale vom gleichen Fahrzeug stammen, wobei insbesondere dieser Umstand in der Datenbank abgespeichert wird.

Zur qualitativen Bestimmung der Ladungsverteilung in einem Fahrzeug kann vorgesehen sein, dass das charakteristische Signal des Fahrzeugs ohne besondere Beladung ermittelt wird für das beladene Fahrzeug neuerlich ein charakteristisches Signal ermittelt wird, und aufgrund der Verstärkung oder Abschwächung des charakteristischen Signals C_{L} des beladenen Fahrzeugs gegenüber dem charakteristischen Signal Cᵤ des unbeladenen Fahrzeugs die Ladungsverteilung ermittelt wird, insbesondere durch ortsweise Bildung des Quotienten q(p) der beiden charakteristischen Signale, gemäß der Formel q(p) = C_{L}(p) / Cᵤ(p).

Zur Detektion von kritischen Zuständen bei einzelnen Fahrzeugen kann vorteilhaft vorgesehen sein, dass ein Maßwert für das Vorliegen eines kritischen Zustands ermittelt wird, indem im charakteristischen Signal nach Positionen gesucht wird, in denen die erste, zweite oder höhere Ableitung des Werts des Signals nach der Ausdehnungsrichtung des jeweiligen Fahrzeugs einen vorgegebenen Schwellenwert überschreitet, wobei der Maßwert eine hohe Wahrscheinlichkeit für das Vorliegen eines kritischen Zustands indiziert, wenn das charakteristische Signal an einzelnen Positionen Spitzen aufweist.

Zur Detektion von Zusammenstößen kann vorteilhaft vorgesehen sein, dass für zwei Fahrzeuge jeweils separate charakteristische Signale ermittelt werden, wobei gegenüber jedem der charakteristischen Signale jeweils eine Referenzposition festgelegt wird, dass der Abstand zwischen den Referenzpositionen ermittelt wird, und dass für den Fall, dass der Abstand einen vorgegebenen Schwellenwert unterschreitet untersucht wird, ob sich im überlagerten Signal der beiden charakteristische Signale eine einen Schwellenwert überschreitende Signalüberhöhung befindet und in diesem Fall das Auftreten eines Zusammenstoßes detektiert wird.

Eine bevorzugte Ausführungsform der Erfindung wird anhand der folgenden Zeichnungsfiguren näher dargestellt.

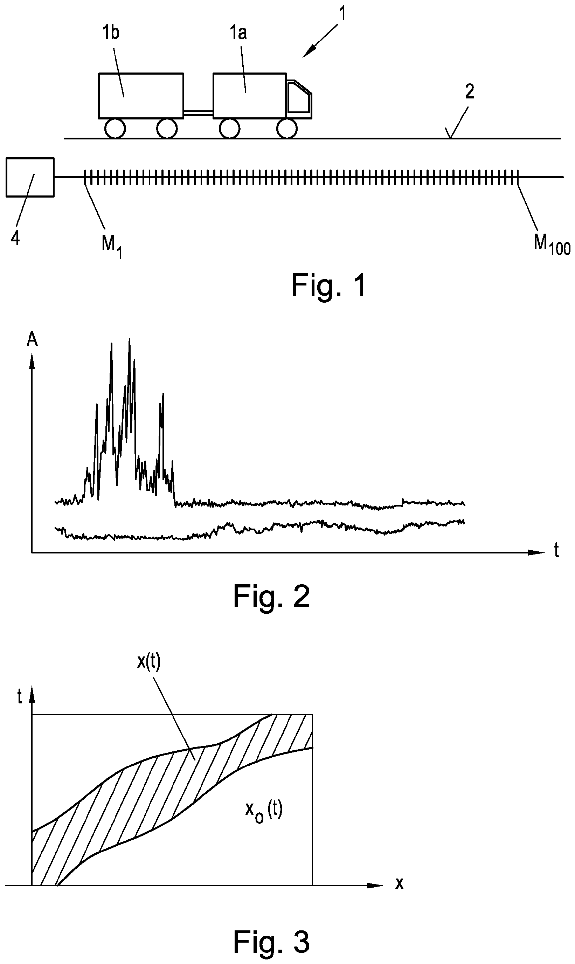

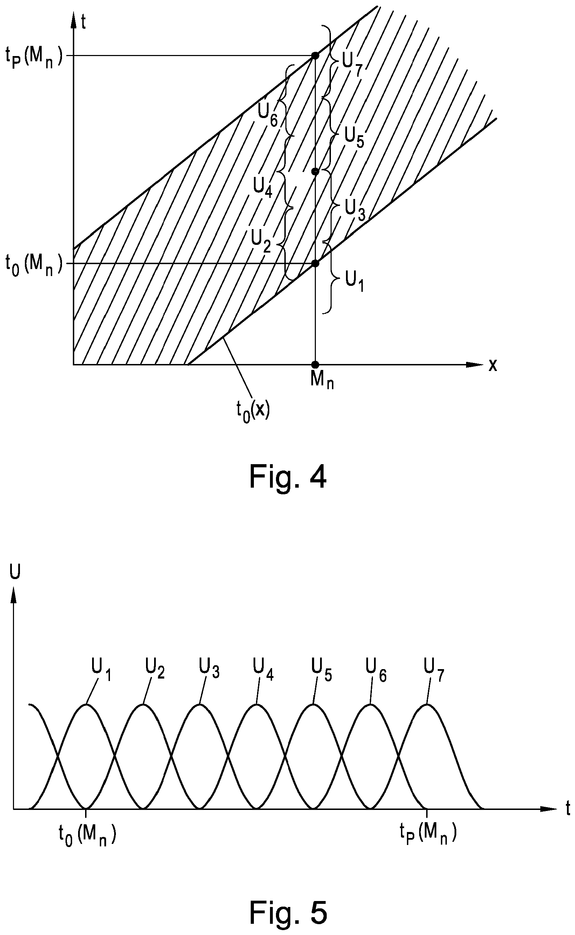

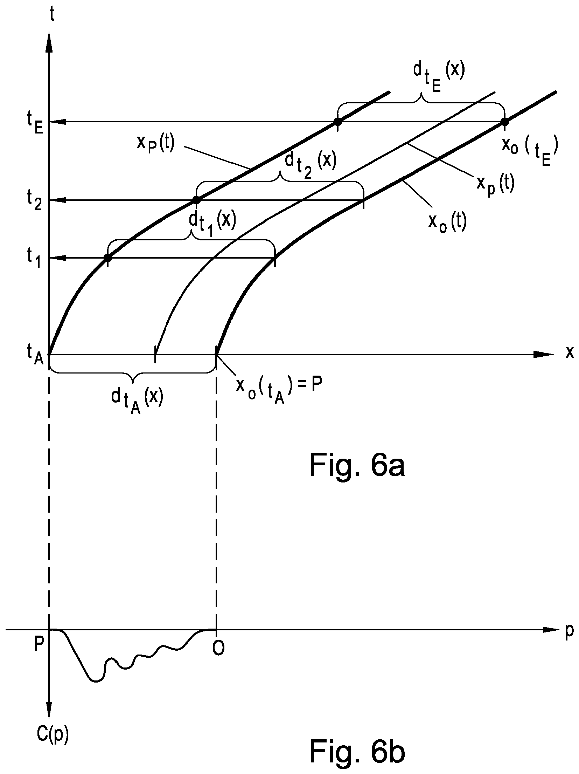

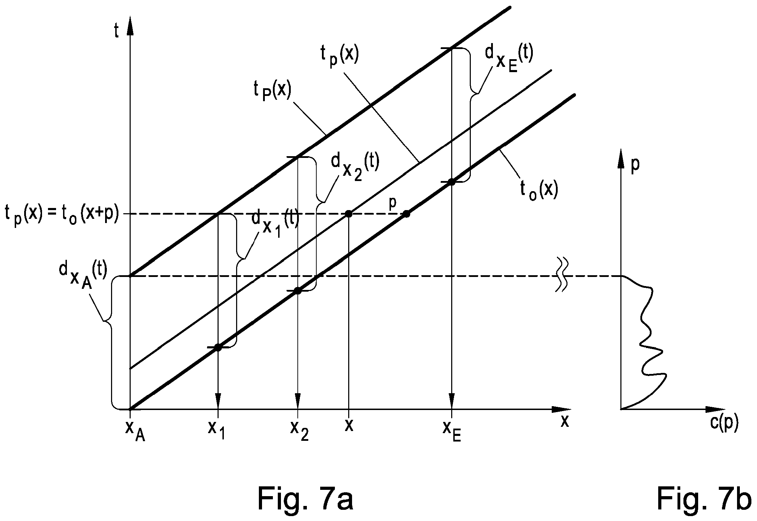

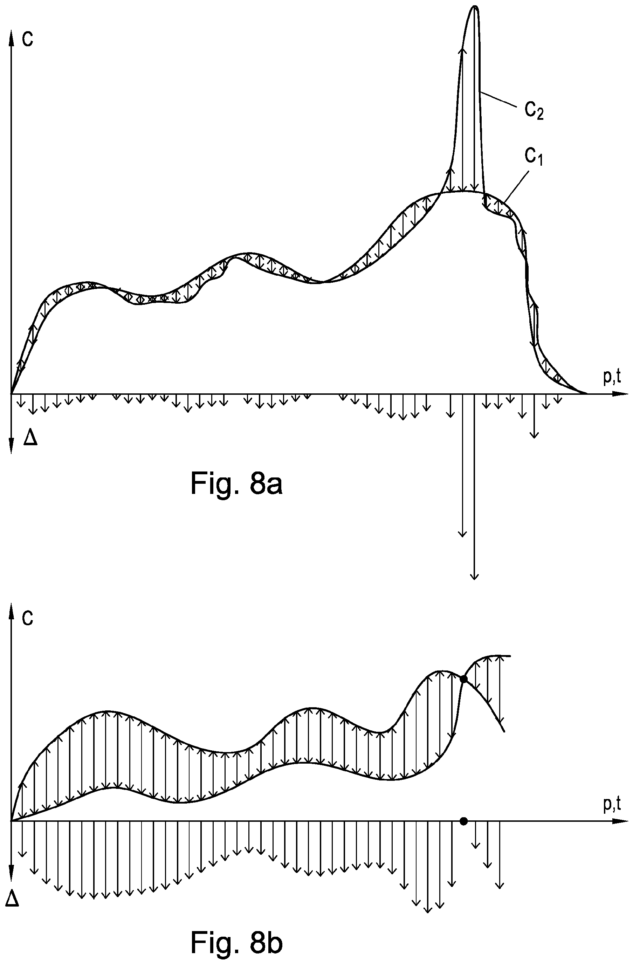

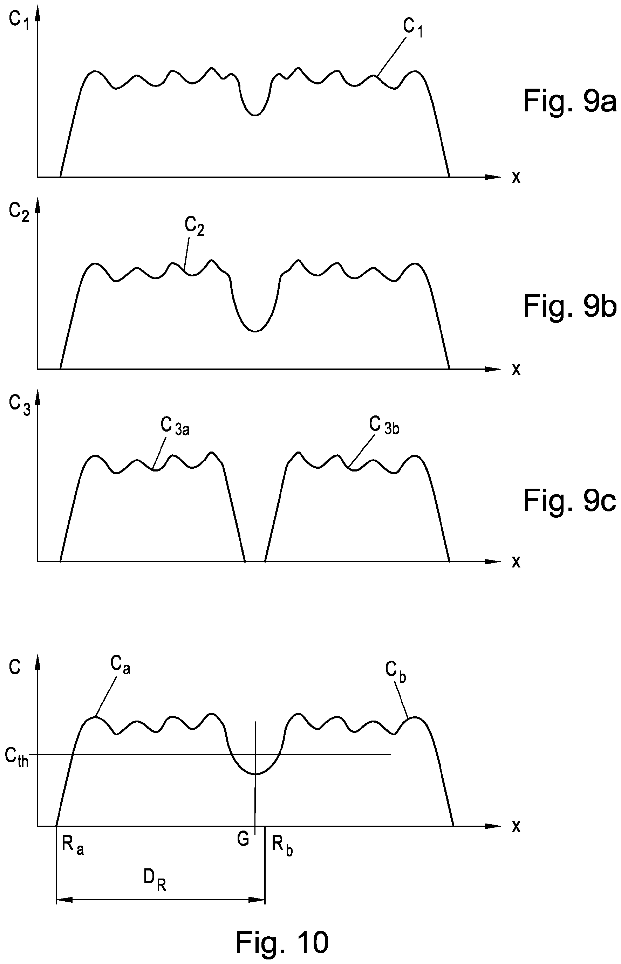

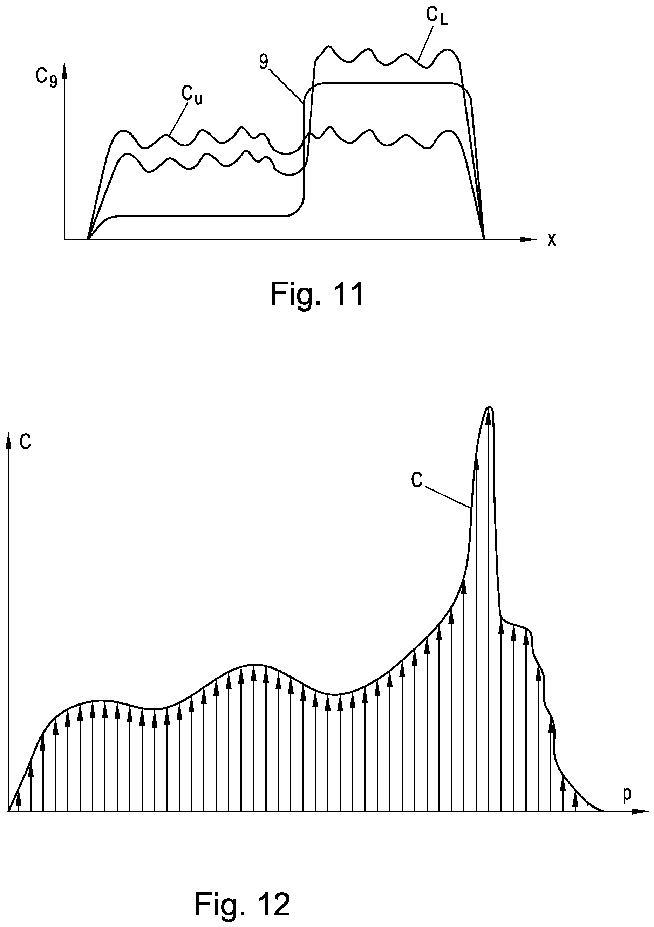

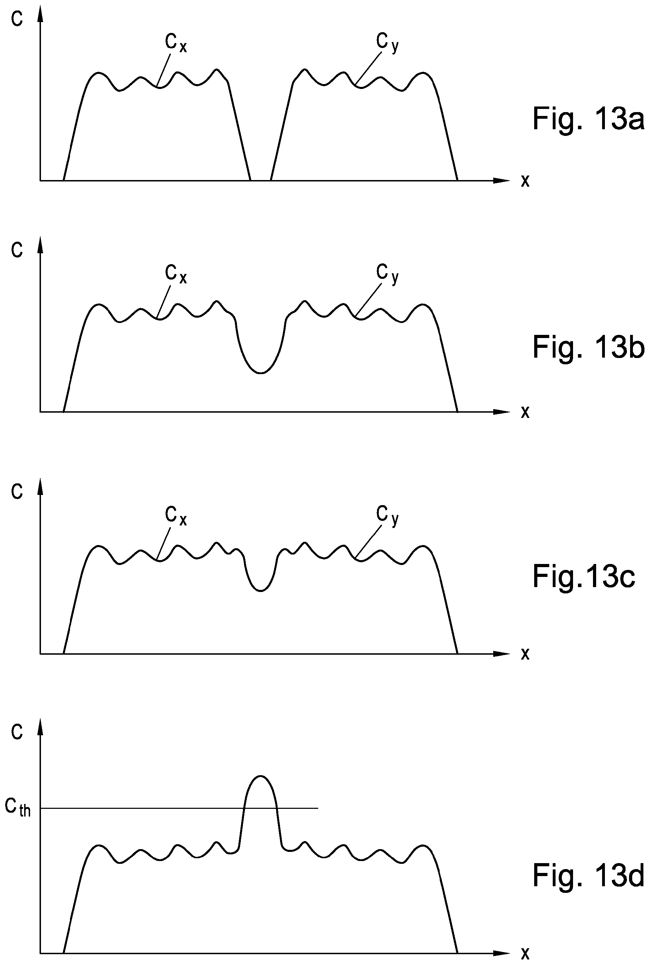

In **Fig. 1** ist ein Fahrzeug dargestellt, das sich entlang eines Fahrtwegs bewegt. In **Fig. 2** sind Messwerte für einen vorgegebenen Abstand vom OTDR-Messgerät dargestellt. In **Fig. 3** ist schematisch ein Feld von Messwerten dargestellt. In **Fig. 4** ist die Filterung der Messwerte dargestellt. **Fig. 5** zeigt die einzelnen für die Gewichtung der Ortskanäle herangezogenen Zeitfenster. **Fig. 6a und 6b** zeigen die Bildung einer charakteristischen Funktion gemäß einer ersten Ausführungsform der Erfindung. **Fig. 7a und 7b** zeigen die Bildung einer charakteristischen Funktion gemäß einer zweiten Ausführungsform der Erfindung. **Fig. 8a und 8b** zeigen die Feststellung bzw Nicht-Feststellung eines kritischen Zustands des Fahrzeugs. In **Fig. 9a bis 9c** ist eine bevorzugte Vorgehensweise zur Erkennung des Verlusts eines Anhängers dargestellt. **Fig. 10** zeigt eine alternative Vorgehensweise bei der Detektion des Verlusts eines Anhängers. In **Fig. 11** ist schematisch eine Vorgehensweise dargestellt, mit der qualitativ die Beladung bzw Ladungsverteilung eines Fahrzeugs festgestellt werden kann. **Fig. 12** zeigt eine Vorgehensweise zur Feststellung eines kritischen Zustands des Fahrzeugs, beispielsweise eines Reifenplatzers. Die **Fig. 13a bis 13d** zeigen schematisch das Vorgehen zur Erkennung eines Zusammenstoßes.

In **Fig. 1** ist ein Fahrzeug 1 dargestellt, dass sich entlang eines Fahrtwegs 2 bewegt. Parallel zu dem Fahrtweg 2 verläuft ein Glasfaserkabel 3, das an eine OTDR-Messeinheit 4 angeschlossen ist. Wie bereits eingangs erwähnt, ermittelt die OTDR-Messeinheit 4 die Vibrationen und Druckänderungen an einer Vielzahl von entlang des Fahrtwegs 2 auf der Glasfaserleitung 3 angeordneten Ortspunkten M₁ ... M₁₀₀. Die Glasfaserleitung 3, die entlang des Fahrtwegs 2 liegt, ist von den vom Fahrzeug 1 ausgehenden Erschütterungen betroffen bzw. ist diesen Erschütterungen unterworfen.

Zu vorgegebenen Zeitpunkten werden Lichtimpulse in die Glasfaserleitung 3 abgegeben. Diese Lichtimpulse werden insbesondere mit einer Häufigkeit oder Frequenz zwischen 100 Hz und 10 kHz abgegeben. Das aus der Glasfaserleitung 3 zurückkehrende Licht wird gemessen, wobei entsprechend der zeitlichen Verzögerung des zurückkehrenden Lichts das Signal einem Ortspunkt M₁ ... M₁₀₀ entlang des Fahrtwegs 2 zugeordnet wird.

Aufgrund der bekannten Signalgeschwindigkeit in der Glasfaserleitung 3 kann aufgrund des Zeitpunkts, zudem ein Signalanteil zu der OTDR-Messeinheit 4 reflektiert wird, auf denjenigen Ortspunkt M₁ ... M₁₀₀ im Fahrtweg 2 rückgeschlossen werden, die einer vorgegebenen Erschütterung unterliegt. Die Stärke oder Phase des zurückkehrenden Lichts wird als Messwert zur Charakterisierung von Vibration oder Druckänderungen im betreffenden Ortpunkt M₁ ... M₁₀₀ herangezogen.

Wird das vorstehend genannte Verfahren gemäß Anspruch 1 zu einer Vielzahl von Zeitpunkten wiederholt, so kann für eine Anzahl von Ortspunkten M₁ ... M₁₀₀ entlang des Fahrwegs 2 und für eine Anzahl von Zeitpunkten jeweils ein Messwert m(x, t) zur Charakterisierung der Vibration oder einer Druckänderung zur Verfügung gestellt werden. In **Fig. 2** sind Messwerte m(x, t) für einen vorgegebenen Abstand x vom OTDR-Messgerät dargestellt; in **Fig. 2** sind lediglich eine obere und eine untere Hüllkurve dargestellt, zwischen denen das Signal oszilliert. In **Fig. 3** ist schematisch ein Feld von Messwerten m(x, t) dargestellt, wobei für jeden Zeitpunkt t und die Position x jedes Ortspunkts M₁ ... M₁₀₀ jeweils ein Messwert m(x, t) vorliegt. Der schraffierte Bereich enthält Messwerte m(x, t), die von einer Schwellenwert überschreitenden Druckänderungen stammen, die von einem konkreten Fahrzeug 1 herrühren. Diese Messwerte m(x, t) sind im Mittel betragsmäßig größer als die übrigen Messwerte m(x, t), die sich außerhalb des schraffierten Bereichs befinden. Darüber hinaus ist im schraffierten Bereich eine Trajektorie dargestellt, die den konkreten Zeit-Wegverlauf des Fahrzeugs 1 darstellt. In allen Fällen kann eine Trajektorie x₀(t) sowohl als der Ortspunkt M₁ ... M₁₀₀, an dem sich der Anfang des Fahrzeugs 1 befindet, als Funktion der Zeit t als auch als Inverse t₀(x) dieser Funktion dargestellt werden, d.h. als Funktion, die angibt, zu welcher Zeit t sich der Anfang des Fahrzeugs 1 an dem Ortspunkt M₁ ... M₁₀₀ befindet.

Die Ermittlung eines solchen Zeit-Wegverlaufs in Form einer Trajektorie x₀(t) kann auf unterschiedliche Art vorgenommen werden, beispielsweise durch GPS-Messung oder sonstige allgemein bekannte Navigationsverfahren. Daneben besteht auch die Möglichkeit, dass zur Ermittlung der Trajektorie x₀(t) des Anfangs des Fahrzeugs 1 am Fahrtweg 2 für eine Anzahl von Ortskanälen jeweils die Signalenergien in einer Mehrzahl von Zeitpunkten innerhalb eines bestimmten Zeitbereichs innerhalb eines bestimmten Frequenzbands oder mehrerer bestimmter Frequenzbänder ermittelt werden. Das Fahrzeug 1 wird innerhalb eines der bestimmten Zeitbereiche oder eines Ortskanals liegend festgestellt, wenn die ermittelte Signalenergie oder die ermittelten Signalenergien vorgegebenen Kriterien entsprechen, insbesondere dann, wenn die ermittelten Signalenergien einen vorgegebenen Schwellenwert überschreiten. Als Frequenzband kann im vorliegenden Fall beispielsweise ein Frequenzband zwischen 50 Hz und 150Hz angenommen werden. Die Trajektorie x₀(t) des Anfangs oder des Endes des Fahrzeugs 1 kann beispielsweise ermittelt werden, indem für jeden Ortskanal der jeweils früheste oder späteste Zeitpunkt ermittelt wird, in dem die Signalenergie einen vorgegebenen Schwellenwert überschreitet oder unterschreitet. Alternativ kann die Trajektorie x₀(t) des Anfangs oder des Endes des Fahrzeugs 1 ermittelt werden, indem für jeden Zeitpunkt der jeweils der dem Messgerät 4 in Erstreckungsrichtung nächstgelegene oder entfernteste Ortspunkt ermittelt wird, in dem die Signalenergie einen vorgegebenen Schwellenwert überschreitet oder unterschreitet.

Bei sämtlichen Verfahren wird die Trajektorie x₀(t) des Anfangs des Fahrzeugs 1 in Bezug auf die Ortspunkte M₁ ... M₁₀₀ in der Zeit ermittelt oder vorgegeben. Die Trajektorie x₀(t) gibt den Ortspunkt M₁ ... M₁₀₀ des Anfangs des Fahrzeugs 1 zu jedem Zeitpunkt t innerhalb eines Zeitbereichs an.

In weiterer Folge wird eine Filterung des Signals, wie in **Fig. 4** dargestellt, vorgenommen, wobei für die Ortspunkte M₁ ... M₁₀₀ jeweils separat die folgenden Schritte durchgeführt werden: Die konkrete Vorgehensweise zur Filterung wird in Bezug auf einen konkreten Ortspunkt Mₙ näher dargestellt. Ausgehend von dem auf der Trajektorie liegenden Zeitpunkt t₀(Mₙ), der dem Ortspunkt Mₙ des jeweiligen Ortskanals zugeordnet wird, wird eine Anzahl von Zeitfenstern U₁....U₇ vorgegeben, die gegenüber dem auf der Trajektorie liegenden Zeitpunkt t₀(Mₙ) festgelegt sind. Das Zeitfenster U₁ liegt im Bereich der Trajektorie, das Zeitfenster U₇ ist gegenüber dem dem Ortskanal zugeordneten Zeitpunkt t₀(Mₙ) am weitesten in Richtung des Endes des Fahrzeugs verschoben. Typischerweise weisen die einzelnen Zeitfenster U₁....U₇ eine Zeitdauer von 0,1s auf und erfassen bzw. überdecken den Bereich, in dem Messwerte vorliegen, die vom Fahrzeug verursacht wurden.

Wie in **Fig. 5** dargestellt, wird für jedes der Zeitfenster U₁....U₇ jeweils eine Gewichtsfunktion erstellt, mit der das dem jeweiligen Ortskanal an der Ortsposition Mₙ zugeordnete Zeitsignal gewichtet wird. Anschließend wird in jedem der Zeitfenster U₁....U₇ des Ortskanals des Ortspunkts M₁ ... M₁₀₀ jeweils separat die Signalenergie innerhalb eines vorgegebenen Frequenzbands ermittelt. Das Frequenzband kann dabei zwischen 250 und 750 Hz liegen. Diese Signalenergie wird dem Fenster U₁....U₇ zugeordnet. Alternativ kann auch vorgesehen sein, dass die Signalenergie einem dem Zeitfenster U₁....U₇ zugeordneten Zeitpunkt t zugewiesen wird. Bei diesem Zeitpunkt t kann es sich beispielsweise um den Mittelpunkt des Zeitfensters U₁....U₇ handeln, es besteht aber auch die Möglichkeit, dass ein anderer Zeitpunkt für das jeweilige Zeitfenster U₁....U₇ gewählt wird, solange hierbei die konkrete zeitliche Abfolge der Zeitfenster erhalten bleibt. Aufgrund der ermittelten Signalenergien wird ein diskretes Signal d(x, t) ermittelt, das einzelnen Zeitpunkten und jedem Ortspunkt M₁ ... M₁₀₀ bzw. jedem Ortskanal die jeweiligen Signalenergien zuordnet.

Basierend auf dem ermittelten diskreten Signal d(x, t) werden die ermittelten Signalwerte entsprechend der Trajektorie x₀(t) des Anfangs des Fahrzeugs 1 einander zugeordnet, sodass die von gleichen Teilen des Fahrzeugs 1 ausgehenden bzw. von gleichen Teilen des Fahrzeugs 1 verursachten Werte aus dem diskreten Signal d(x, t) einander zugeordnet werden. Entsprechend der Fortbewegung des Fahrzeugs 1 besteht hierbei die Möglichkeit, dass die einzelnen ermittelten Signalwerte d(x, t) entsprechend der Trajektorie t₀(x) oder x₀(t) entzerrt werden oder interpoliert werden. Die einzelnen einander zugeordneten gegebenenfalls verschobenen entzerrten oder interpolierten Werte des diskreten Signals werden aggregiert, im vorliegenden Fall summiert, wodurch ein charakteristisches Signal C ermittelt wird. Dieses charakteristische Signal C weist für jeden Längsabschnitt des Fahrzeugs 1 jeweils einen Wert auf. Das charakteristische Signal C kann insgesamt charakteristisch für das Fahrzeug bzw. die von dem Fahrzeug abgegebenen Vibrationen oder Druckänderungen angesehen werden.

Um eine konkrete Zuordnung von Teilen des diskreten Signal d(x, t) entsprechend der Trajektorie x₀(t) zu finden, können grundsätzlich unterschiedliche Vorgehensweise gewählt werden.

Bei einer ersten bevorzugten Ausführungsform **(****Fig. 6a, 6b****)** innerhalb eines Intervalls der Erfindung wird für jeden Zeitpunkt [t_{A}; t_{E}] des diskreten Signals d(x, t) jeweils der auf das Fahrzeug 1 zurückgehende Signalanteil d_{tA}(x), dₜ₁(x), dₜ₂(x),...d_{tE}(x) ermittelt. Unter der Voraussetzung, dass das konkrete Fahrzeug 1 während der Fahrt seine Länge P nicht oder nur geringfügig ändert, kann aufgrund der konkreten Trajektorie x₀(t) die Vielzahl der einzelnen Teilsignale d_{tA}(x), dₜ₁(x), dₜ₂(x), d_{tE}(x) entsprechend der Trajektorie x₀(t) derart verschoben werden, dass sämtliche vom selben Teil des Fahrzeugs 1 ausgehenden Werte aus dem diskreten Signal d(x, t) jeweils auf den Punkt p im charakteristischen Signal (C) werden. Anschließend werden die derart verschobenen Teilsignale punktweise aggregiert.

Im Detail wird die Fahrzeuglänge als konstant mit P angenommen. Die Trajektorie des Anfangs des Fahrzeugs wird mit x₀(t) bezeichnet, die Trajektorie der Position p (p ∈ [0, P]) im Fahrzeugs wird mit xₚ(t) bezeichnet, die Trajektorie des Endes des Fahrzeugs wird mit x_{P}(t) bezeichnet. Nachdem das Fahrzeug 1 immer annähernd gleich lang ist sich nicht - bzw. für die Messung nur unwesentlich - verformt, gilt xₚ(t)=x₀(t)-p. Betrachtet wird nun ein Zeitausschnitt [t_{A}, t_{E}]. Die Werte des diskreten Signals d(x, t) werden entlang der x-Achse abhängig von t verschoben. Man erhält ein verschobenes Signal d_{c}(p,t)=d(xₚ(t), t) für p ∈ [0,P] und t ∈ [t_{A}, t_{E}]. Dieses verschobene Signal d_{c}(p, t) ist abhängig von der Position bezogen auf das Fahrzeug 1 und von der Zeit. Danach kann durch Summation das charakteristische Signal des Fahrzeugs 1 entsprechend der Formel C(p) = ∑_{t∈[TA}, _{TE]} d_{c}(p,t) ermittelt werden.

Eine weitere bevorzugte Vorgehensweise **(****Fig. 7a, 7b****)** zur Ermittlung eines charakteristischen Signals C sieht vor, dass dem diskreten Signal d(x, t) für jeden Ortspunkt M₁ ... M₁₀₀; x_{A}, x_{1;} x₂, x_{E} jeweils ein separates diskretes Zeitsignal entnommen wird. Bei gleichförmiger Bewegung des Fahrzeugs 1 mit konstanter Geschwindigkeit sind die einzelnen Zeitbereiche, bei denen das jeweilige Fahrzeug 1 an einen bestimmten Ort Schwingungen, Druckänderungen oder Vibrationen verursacht jeweils gleich lang. Die einzelnen derart ermittelten diskreten Zeitsignale werden entsprechend der Trajektorie derart verschoben, dass von gleichen Teilen des Fahrzeugs 1 herrührende Signalwerte jeweils auf den selben Zeitpunkt fallen. Im vorliegenden Fall werden sämtliche diskrete Zeitsignale dₓ(t) derart verschoben, dass sie mit dem diskreten Zeitsignal d_{xA}(t) zum Ortspunkt x_{A} gleich ausgerichtet werden. Anschließend werden die so verschobenen Zeitsignale zeitpunktweise aggregiert und das so erhaltene Ergebnis als charakteristisches Signal C herangezogen.

Sofern bei der dargestellten Vorgehensweise Beschleunigungen und Verzögerungen des Fahrzeugs 1 vorliegen, verläuft die Trajektorie nicht linear, zB wie in **Fig. 6a und 6b** dargestellt. Die einzelnen Zeitsignale dₓ(t) sind in diesem Fall unterschiedlich lang. Aus diesem Grund werden die einzelnen Zeitsignale dₓ(t) derart entzerrt, d.h. nichtlinear gestreckt oder gestaucht, dass ihre Länge einem Referenzzeitsignal unter den Zeitsignalen entspricht und gleiche Positionen p bezogen auf das Fahrzeug 1 an derselben Stelle im verzerrten Zeitsignal zu liegen kommen. Anschließend werden die Zeitsignale dₓ(t) verschoben und wiederum zeitpunktweise aggregiert, sodass aus dieser Aggregation ein charakteristisches Signal erhalten wird. Gegebenenfalls kann das charakteristische Signal durch Umrechnung p = t*v₀ in ein auf das Fahrzeug 1 bezogenes Signal umgerechnet werden, wobei v₀ die Geschwindigkeit des Fahrzeugs bezeichnet.

Wie die Aggregation konkret vorgenommen wird, ist von untergeordneter Bedeutung. Üblicherweise reicht eine bloße Summation der einzelnen verschobenen und gegebenenfalls entzerrten Zeit- oder Ortssignale aus, um ein Signal zu ermitteln, das charakteristisch für das jeweilige Fahrzeug 1 ist.

Im Detail kann eine verschobene und entzerrte Funktion d_{c} aufgrund des diskreten Signals d(x, t) ermittelt werden, die nur von der Zeit und von der Position p ∈ [0, P] bezogen auf das Fahrzeug 1 abhängt. Als Betrachtungsintervall entlang des Ortes wird das Ortsintervall [x_{A}, x_{E}] zwischen den Ortspunkten x_{A} und x_{E} festgelegt. Die Trajektorie des Anfangs des Fahrzeugs 1 wird mit t₀(x) bezeichnet. Für jede Position p ∈ [0, P] wird die zugehörige Trajektorie mit tₚ(x) bezeichnet. Wie aus der Skizze ersichtlich wird gilt tₚ(x) = t₀(x+p). Aus dem diskreten Signal d(x,t) wird ein verschobenes Signal d_{c}(x,p) = d(x,tₚ(x)) für x ∈ [X_{A}, X_{E}] und p ∈ [0,P] ermittelt. Das charakteristische Signal für das gesamte Fahrzeug 1 ergibt sich dann als C(p) = ∑_{x∈[XA,XE]} d_{c}(x,p).

Kommt es aufgrund der Verzerrung oder Verschiebung dazu, dass aufgrund des Verlaufs der Trajektorie x₀(t) Stützpunkte gewählt werden, die mit den diskreten Ort- und Zeit-Stützpunkten des diskreten Zeitsignals nicht übereinstimmen, so kann eine Interpolation der Orts- und Zeitkanäle vorgenommen werden, sodass letztendlich eine Verschiebung von Orts- und Zeitsignalen um beliebige durch die Trajektorie x₀(t) festgelegte Werte möglich ist.

Alternativ besteht auch die Möglichkeit, dass sich die Fensterstützpunkte an diskreten Äquidistanten oder in jeden Ortskanal gleich festgelegten Zeiten befinden und zur Verschiebung entsprechend der Trajektorie x₀(t) die einzelnen Ortskanäle nur um ganzzahlige vielfache des Abstands dieser Zeiten verschoben werden.

Nach der Ermittlung eines charakteristischen Signals C besteht nunmehr die Möglichkeit, an mehreren Stellen entlang des Fahrtwegs 2 bzw. zu mehreren Zeitpunkten während der Fahrt, gemäß einer der vorstehend genannten Vorgehensweisen, ein charakteristisches Signal C zu ermitteln. Die einzelnen charakteristischen Signale C₁, C₂ werden miteinander verglichen, wobei ein Übereinstimmungswert ermittelt wird.. Dieser Übereinstimmung gibt an, dass die beiden Signale tatsächlich vom selben Fahrzeug herrühren, wobei Änderungen des Signals gegebenenfalls auf Änderungen der Beschaffenheit des Fahrzeugs bzw. auf einen kritischen Zustand hindeuten.

Ein verbessertes Vorgehen, einen kritischen Zustand eines Fahrzeugs, beispielsweise einen Reifenplatzer oder veränderte Fahrzeuggeräusche aufgrund von Motorschäden oder schlagenden Teilen festzustellen, wird im Folgenden unter Bezugnahme auf **Fig. 8a und 8b** dargestellt: Hierbei wird ein Maßwert für die Wahrscheinlichkeit eines solchen kritischen Zustands ermittelt, der dann eine hohe Wahrscheinlichkeit für das Vorliegen eines kritischen Zustands indiziert, wenn die beiden charakteristischen Signale C₁, C₂ an einzelnen Positionen große Abweichungen zeigen, im Übrigen jedoch übereinstimmen. Dies kann insbesondere derart erreicht werden, wenn einzelne Werte des charakteristischen Signals C miteinander verglichen werden, wobei ein kritischer Zustand des Fahrzeugs festgestellt wird, wenn bei diesem Vergleich einzelne Signalwerte einander zugeordneter Positionen im Wesentlichen gleich sind, an einigen wenigen Stellen jedoch wesentlich von einander abweichen.

Wenn beim Vergleich zweier vom selben Fahrzeug 1 vor und nach dem Auftreten des kritischen Zustands aufgenommener Signale einen Schwellenwert überschreitende Unterschiede lediglich in einer einen Schwellenwert unterschreitenden Stellen des charakteristischen Signals vorhanden sind, kann von einem kritischen Zustand ausgegangen werden. Ein kritischer Zustand kann zum Beispiel dann festgestellt werden, wenn beim Vergleich zweier vom selben Fahrzeug 1 vor und nach dem Auftreten des kritischen Zustands aufgenommener charakteristischer Signale Unterschiede von wenigstens 100 % in weniger als durch einen vorgegebenen oberen Schwellenwert entsprechenden Stellen des charakteristischen Signals vorhanden sind. Dieser obere Schwellenwert wird vorteilhafterweise auf einen Wert gesetzt, der der Anzahl von vorgegebenen Ortspunkten M₁, ..., M₁₀₀ entspricht, die durchschnittlich auf 1 m bis 5 m des Fahrtwegs 2 angeordnet sind. Bei einer Verteilung der Messpunkte M₁, ..., M₁₀₀ etwa in Abständen von 70 cm auf dem Fahrtweg, hat der Schwellenwert etwa den Wert 7.

In Fig. 8a sind zwei charakteristische Signale C₁, C₂ von ein und demselben Fahrzeug 1 dargestellt. Die Abweichung Δ der beiden charakteristischen Signale ist in **Fig. 8a** ebenfalls dargestellt. Wie aus **Fig. 8a** zu erkennen, ist ein kritischer Zustand im charakteristischen Signal dadurch indiziert, dass an einer einzigen Stelle eine große Abweichung zwischen den beiden charakteristischen Signalen C₁, C₂ besteht. Im Übrigen sind die beiden charakteristischen Signale sehr ähnlich, sodass die Abweichung zwischen diesen beiden Signalen relativ gering ist. Da im vorliegenden Fall Unterschiede Δ der beiden charakteristischen Signale lediglich bei einer geringen Anzahl von Stellen innerhalb des charakteristischen Signals bestehen, ist das Vorliegen eines kritischen Zustands wahrscheinlich.

Demgegenüber sind in **Fig. 8b** zum Vergleich zwei charakteristische Signale dargestellt, die von unterschiedlichen Fahrzeugen 1 stammen. Bei diesen charakteristischen Signalen C₁, C₂ liegen Unterschiede zwischen den einzelnen Signalwerten an einer Vielzahl von Stellen vor. Insgesamt sind diese Unterschiede relativ gleich verteilt, kann das Vorliegen eines kritischen Zustands verneint werden.

Um eine verbesserte Detektion von kritischen Zuständen zu erreichen, kann in beiden der in **Fig. 8a und 8b** dargestellten Fälle vorgesehen sein, dass die charakteristischen Signale C vor ihrem Vergleich normalisiert werden, d.h. dass das charakteristische Signal C bzw. die einzelnen Signalwerte insgesamt mit einem Faktor multipliziert wird bzw. werden, dass die Summe der Beträge oder der Signalanteile für beide charakteristischen Signale C₁, C₂ oder sonst eine auf C₁ und C₂ angewandte Norm gleich groß ist. Mit dieser Vorgehensweise können Störeffekte vermieden werden, die dadurch entstehen, dass aufgrund unterschiedlicher Distanzen des Fahrtwegs 2 vom jeweiligen Ortspunkt M₁, ..., M₁₀₀ einzelne charakteristische Signale stärker oder schwächer aufgenommen werden.

Bei einer weiteren Ausführungsform der Erfindung werden Änderungen der Länge des Fahrzeugs 1 vorteilhaft erkannt. Dies ist insbesondere in Anwendungen von Vorteil, bei denen erkannt wird, ob ein Fahrzeug 1 bestehend aus einer Zugmaschine 1a und einem Anhänger 1b diesen Anhänger 1b während der Fahrt verloren hat. Zu diesem Zweck wird, wie in **Fig. 9a bis 9c** dargestellt das charakteristische Signal des Fahrzeugs 1 im Normalzustand aufgenommen, das Fahrzeug 1 wird während seiner Bewegung beobachtet. Dabei ist es natürlich auch möglich, dass das betreffende Fahrzeug 1 mit unterschiedlichen OTDR-Messgeräten 4 an unterschiedlichen Fahrbahnabschnitten gemessen wird. In **Fig. 9a** ist ein charakteristisches Signal C₁ dargestellt, das an einer ersten Position aufgenommen wurde, bei der das Fahrzeug 1 intakt war. Aufgrund eines Fehlers in der Kupplung kommt es bei dem in **Fig. 9b** dargestellten charakteristischen Signal C₂ zu einer geringfügigen Streckung des charakteristischen Signals. Verliert die Zugmaschine 1a den Anhänger 1b vollständig, so erhält man letztlich zwei voneinander getrennte charakteristische Signale, eines für die Zugmaschine 1a, eines für den Anhänger 1b **(****Fig. 9c****).** Die räumliche Auftrennung des charakteristischen Signals C₃ in ein charakteristisches Signal C₃ₐ der Zugmaschine 1a von dem charakteristischen Signal des Anhängers 1b kann ermittelt werden, ein kritischer Betriebszustand kann festgestellt werden.

Alternativ besteht auch die Möglichkeit, wie in **Fig. 10** dargestellt, die beiden charakteristischen Signale der Zugmaschine 1a und des Anhängers 1b separat zu ermitteln. Dies kann vorteilhafterweise derart erfolgen, dass das charakteristische Signal C_{ab} des gesamten Fahrzeugs gemessen wird und anschließend in das charakteristische Signal Cₐ der Zugmaschine 1a und das charakteristische Signal C_{b} des Anhängers 1b unterteilt wird. Die beiden charakteristischen Signale Cₐ, C_{b} können beispielsweise voneinander getrennt werden, indem nach einer Grenze G zwischen den beiden Signalen Cₐ, C_{b} gesucht wird, in dem die Signalwerte einen vorgegebenen Schwellenwert Cₜₕ unterschreiten. In jedem der Signale wird eine Referenzposition Rₐ, R_{b} vorgegeben und die Differenz D_{R} der beiden Referenzpositionen ermittelt. In einem weiteren, insbesondere laufend erneut ausgeführten, Berechnungsschritt kann ermittelt werden, welche Differenz D_{R'} die Referenzpositionen die beiden neuerlich ermittelten charakteristischen Signale Cₐ, C_{b} zueinander haben, wobei die Veränderung Differenz D_{R'} die Referenzpositionen Rₐ, R_{b} über die Zeit beobachtet wird. Übersteigt der so ermittelte Wert der Differenz D_{R'} die Referenzpositionen Rₐ, R_{b} einen vorgegebenen Schwellenwert, zB 110% des ursprünglichen Werts der Differenz D_{R}, ist davon auszugehen, dass die Zugmaschine 1a den Anhänger 1 verloren hat.

Eine weitere vorteilhafte Verwendung von charakteristischen Signalen ist in der nachstehend genannten bevorzugten Ausführungsform der Erfindung näher dargestellt. Hierbei werden an unterschiedlichen Orten und/oder Zeiten die charakteristischen Signale unterschiedlicher Fahrzeuge 1 gemessen. Wird ein Fahrzeug ermittelt, so wird für dieses Fahrzeug 1 zumindest ein charakteristisches Signal in einer Datenbank abgespeichert. Wird zu einem späteren Zeitpunkt neuerlich ein charakteristisches Signal eines Fahrzeugs ermittelt, so wird dies mit den in der Datenbank abgespeicherten Signalen verglichen. Ergibt der Vergleich, dass die beiden charakteristischen Signale übereinstimmen, so ist davon auszugehen, dass ein Fahrzeug, das zu einem anderen Zeitpunkt und gegebenenfalls an einem anderen Ort erfasst wurde, nunmehr wieder aufgefunden wurde. Dies ermöglicht es, die Position von Fahrzeugen nachzuverfolgen. Gegebenenfalls kann das als übereinstimmend identifizierte Signal neuerlich in der Datenbank abgespeichert und ebenfalls dem Fahrzeug 1 zugewiesen werden.

Zum Vergleich der charakteristischen Signale können unterschiedliche Differenzmaße herangezogen werden. Vorteilhafterweise kann eine Norm, insbesondere die Zweiernorm, der Differenz der beiden Signale herangezogen werden, um die Unterschiedlichkeit zweier Signale zu bestimmen.

Eine weitere vorteilhafte Anwendung der Erfindung ermöglicht es, die Ladungsverteilung innerhalb eines Fahrzeugs 1 festzustellen. Ist das charakteristische Signal Cᵤ eines Fahrzeugs ohne besondere Beladung bekannt **(****Fig. 11****)** und wird für das Fahrzeug 1 neuerlich ein charakteristisches Signal C_{L} ermittelt, so kann aufgrund der Verstärkung oder Abschwächung des charakteristischen Signals C_{L} des beladenen Fahrzeugs gegenüber dem charakteristischen Signal Cᵤ des unbeladenen Fahrzeugs die Ladungsverteilung ermittelt werden. So kann beispielsweise durch ortsweise Bildung des Quotienten q(p) der beiden charakteristischen Signale, gemäß der Formel q(p) = C_{L}(p) / Cᵤ(p), qualitativ ermittelt werden, wie stark die Ladung im betreffenden Fahrzeug verteilt ist.

In **Fig. 12** ist eine weitere Ausführungsform der Erfindung im Detail dargestellt, die vorteilhaft kritische Situationen bzw. Zustände beim betreffenden Fahrzeug 1 feststellt. Hierfür wird nach auffälligen Spitzen oder Schwankungen im betreffenden charakteristischen Signal gesucht und sofern im Signal solche Spitzen oder Schwankungen auffindbar sind, wird ein kritischer Zustand festgestellt. Besonders vorteilhaft kann im charakteristischen Signal nach Positionen p* gesucht werden, in denen die erste, zweite oder höhere Ableitung des Werts des Signals nach der Ausdehnungsrichtung p des Fahrzeugs einen vorgegebenen Schwellenwert überschreitet. In diesem Fall wird ein kritischer Zustand des jeweiligen Fahrzeugs 1 an der ermittelten Position p* erkannt.

Eine weitere bevorzugte Ausführungsform der Erfindung betrifft den Fall der Detektion von Unfällen, insbesondere Auffahrunfällen und Zusammenstößen, von Fahrzeugen. Jedes der Fahrzeuge weist dabei ein charakteristisches Signal Cx, Cy auf, das sich über die Zeit nur geringfügig verändert. Fahren zwei Fahrzeuge hintereinander, so entstehen auch die charakteristischen Signale Cx, Cy der beiden Fahrzeuge hintereinander **(****Fig. 13a****).**

Bewegen sich die Fahrzeuge aufeinander zu, so nähern sich die charakteristischen Signale aneinander an bzw überlagern sich deren charakteristische Signale Cx, Cy **(****Fig. 13b****).**

Fahren die Fahrzeuge aneinander vorbei, so überlagern sich die Signale weiter und verschmelzen gegebenenfalls ineinander **(****Fig. 13c****).** Prallen die Fahrzeuge, beispielsweise bei einem Auffahrunfall, zusammen, so ergibt sich im Bereich zwischen den charakteristischen Signalen Cx, Cy eine einen Schwellenwert überschreitende Überhöhung im Signal, die gemessen werden kann.

## Patentansprüche

1. Verfahren zur Bestimmung eines charakteristischen Signals für ein sich entlang eines Fahrtwegs (2) bewegendes Fahrzeug (1),
a) wobei entlang des Fahrtwegs (2) mittels eines langgestreckten akustischen Sensors (3) in Form eines Glasfaserkabels, das entlang des Fahrtwegs (2) liegt und von den vom Fahrtweg (2) ausgehenden Erschütterungen betroffen ist, Messwerte zur Charakterisierung von Vibrationen oder Druckänderungen an einer Vielzahl von entlang des Fahrtwegs (2) angeordneten Ortspunkten (M₁ ... M₁₀₀) bestimmt werden,
wobei zu vorgegebenen Zeitpunkten
- jeweils ein Lichtimpuls in das Glasfaserkabel abgegeben wird,
- das aus dem Glasfaserkabel zurückkehrende Licht gemessen wird, wobei entsprechend der zeitlichen Verzögerung des zurückkehrenden Lichts das Signal einem Ortspunkt (M₁ ... M₁₀₀) entlang des Fahrtwegs (2) zugeordnet wird, und
- wobei die Stärke oder Phase des zurückkehrenden Lichts als Messwert zur Charakterisierung von Vibrationen oder Druckänderungen im betreffenden Ortspunkt (M₁ ... M₁₀₀) herangezogen wird,
b) wobei für eine Anzahl von Ortspunkten (M₁ ... M₁₀₀) entlang des Fahrtwegs (2) und für eine Anzahl von Zeitpunkten (t) basierend auf der Stärke oder Phase des gemessenen, zurückkehrenden Lichts jeweils ein Messwert (m(x, t)) zur Charakterisierung der Vibration oder einer Druckänderung zur Verfügung gestellt wird,
c) wobei eine Trajektorie (x₀(t); t₀(x)) des Fahrzeugs (1) in Bezug auf die Wegpunkte in der Zeit ermittelt oder vorgegeben wird, wobei die Trajektorie (x₀(t); t₀(x)) den Ortspunkt (M₁ ... M₁₀₀) eines vorgegebenen Teils des Fahrzeugs (1) zu jedem Zeitpunkt (t) innerhalb eines Zeitbereichs (T) angibt,
d) wobei für Ortspunkte (M₁ ... M₁₀₀) jeweils separat
- im Bereich des Fahrzeugs (1) bzw dessen Trajektorie (x₀(t); t₀(x)) im jeweiligen Ortspunkt (M₁ ... M₁₀₀) eine Anzahl von Zeitfenstern (U) vorgegeben wird,
- in jedem der Zeitfenster des Ortspunkts (M₁ ... M₁₀₀) separat jeweils die Signalenergie innerhalb eines vorgegebenen Frequenzbands ermittelt wird, und diese Signalenergie einem dem Zeitfenster (U) zugeordneten Zeitpunkt (t) zugewiesen wird, sodass ein diskretes Signal (d(x, t)), das jedem Ortspunkt (M₁ ... M₁₀₀) für einzelne Zeitpunkte die zugehörigen Signalenergien zuordnet, zur Verfügung steht,
e) die einzelnen Werte des diskreten Signals (d(x, t)) entsprechend der Trajektorie (x₀(t); t₀(x)) des Fahrzeugs (1) derart einander zugeordnet werden, dass die von gleichen Teilen des Fahrzeugs (1) ausgehenden Werte aus dem diskreten Signal (d(x, t)) einander zugeordnet werden,
f) wobei die einzelnen einander zugeordneten Werte des diskreten Signals (d(x, t)) über die Zeit und/oder über den Ort aggregiert werden, und derart ein charakteristisches Signal (C) ermittelt wird, das als charakteristisch für das Fahrzeug (1) angesehen wird.

2. Verfahren nach Anspruch 1, **dadurch gekennzeichnet, dass** zur Bestimmung des charakteristischen Signals (C)
- aus dem diskreten Signal (d(x, t)) für jeden Zeitpunkt jeweils ein separates diskretes Ortssignal (dₜ(x)) entnommen wird,
- die einzelnen diskreten Ortssignale (dₜ(x)) entsprechend der Trajektorie (x₀(t)) derart verschoben werden, dass von gleichen Teilen des Fahrzeugs (1) herrührende Signalanteile jeweils auf derselben Ortsposition (x) zu liegen kommen, und
- die derart verschobenen Ortssignale (dₜ(x)) ortspunktweise aggregiert werden.

3. Verfahren nach Anspruch 1, **dadurch gekennzeichnet, dass** zur Bestimmung des charakteristischen Signals (C)
- aus dem diskreten Signal (d(x, t)) für jeden Ortspunkt (M₁ ... M₁₀₀) jeweils ein separates diskretes Zeitsignal (dₓ(t)) entnommen wird,
- die einzelnen diskreten Zeitsignale (dₓ(t)) entsprechend der Trajektorie derart verschoben und bei Vorliegen von Beschleunigungen oder Verzögerungen des Fahrzeugs (1) in der Trajektorie (x₀(t); t₀(x)) entzerrt werden, dass von gleichen Teilen des Fahrzeugs (1) herrührende Signalanteile jeweils auf denselben Zeitpunkt (t) fallen, und
- die derart verschobenen Zeitsignale (dₓ(t)) zeitpunktweise aggregiert werden und das so erhaltene Ergebnis als charakteristisches Signal herangezogen wird.

4. Verfahren nach Anspruch 3, **dadurch gekennzeichnet, dass** die diskreten Signale entsprechend der Trajektorie (x₀(t); t₀(x)) des Fahrzeugs (1) derart gegeneinander verschoben werden, dass
a) sich die Stützpunkte des jeweiligen Zeitfensters an diskreten äquidistanten und in jedem Ortskanal gleich festgelegten Zeiten befinden, und zur Verschiebung entsprechend der Trajektorie (x₀(t); t₀(x)) die diskreten Zeitsignale (dₓ(t)) nur um ganzzahlige Vielfache des Abstands dieser Zeiten verschoben werden, oder
b) die einzelnen Ortskanäle (M₁ ... M₁₀₀) interpoliert und anschließend verschoben werden.

5. Verfahren nach einem der vorangehenden Ansprüche, **dadurch gekennzeichnet, dass** die Lichtimpulse mit einer Frequenz zwischen 100 Hz und 10 kHz in das Glasfaserkabel (3) abgegeben werden.

6. Verfahren nach einem der vorangehenden Ansprüche, **dadurch gekennzeichnet, dass** zur Ermittlung der Trajektorie (x₀(t)) des Anfangs des Fahrzeugs (1) am Fahrtweg (2) für eine Anzahl von Ortskanälen jeweils die Signalenergien in einer Mehrzahl von Zeitpunkten innerhalb eines bestimmten Zeitbereichs innerhalb eines bestimmten Frequenzbands oder mehrerer bestimmter Frequenzbänder ermittelt werden und dass die Trajektorie innerhalb eines Zeitbereichs und eines Ortskanals liegend festgestellt wird, wenn die ermittelte Signalenergie oder die ermittelten Signalenergien einen vorgegebenen Schwellenwert überschreiten,
wobei insbesondere die Trajektorie (x₀(t)) des Anfangs oder des Endes des Fahrzeugs (1) ermittelt wird, indem für jeden Ortskanal der jeweils früheste oder späteste Zeitpunkt ermittelt wird, in dem die Signalenergie einen vorgegebenen Schwellenwert überschreitet oder unterschreitet.

7. Verfahren nach einem der vorangehenden Ansprüche, **dadurch gekennzeichnet,**
- **dass** für die Bestimmung eines charakteristischen Signals jeweils Messwerte (m(x, t)) herangezogen werden, die innerhalb eines Zeitbereichs von weniger als 20 Sekunden, aufgenommen wurden, und/oder
- **dass** charakteristische Signale laufend in Zeitintervallen von zwischen 0,5 und 10 Sekunden erstellt werden und/oder dass Vergleiche zwischen charakteristischen Signalen vorgenommen werden, die innerhalb von weniger als 10 Sekunden erstellt wurden.

8. Verfahren nach einem der vorangehenden Ansprüche, wobei das Fahrzeug eine Zugmaschine (1a) und einen Anhänger umfasst,
**dadurch gekennzeichnet, dass**
- für das gesamte Fahrzeug (1) ein einziges charakteristisches Signal zu einem Zeitpunkt ermittelt wird, zu dem das Fahrzeug intakt ist und seinen Normalzustand mit einer Zugmaschine (1a) und einem Anhänger aufweist, und
- dass für den Fall, dass sich das charakteristische Signal des Fahrzeugs (1) zu einem späteren Zeitpunkt in zwei voneinander getrennte Signale (Cx, Cy) aufteilt, der Verlust des Anhängers (1b) festgestellt wird.

9. Verfahren nach einem der vorangehenden Ansprüche, wobei das Fahrzeug eine Zugmaschine (1a) und einen Anhänger (1b) umfasst,
**dadurch gekennzeichnet, dass**
- für die Zugmaschine (1a) und den Anhänger (1b) jeweils separate charakteristische Signale (Cx, Cy) ermittelt werden, wobei gegenüber jedem der charakteristischen Signale (Cx, Cy) jeweils eine Referenzposition (Rx, Ry) festgelegt wird,
- dass der Abstand zwischen der Referenzposition des charakteristischen Signals der Zugmaschine (1a) zur Referenzposition des charakteristischen Signals des Anhängers (1b) zu einem Zeitpunkt ermittelt als Referenzabstand wird, zu dem das Fahrzeug intakt ist, und
- dass der Abstand zu einem späteren Zeitpunkt erneut ermittelt wird, und für den Fall, dass der Abstand einen vorgegebenen Schwellenwert überschreitet, der Verlust des Anhängers festgestellt wird.

10. Verfahren nach einem der voranstehenden Ansprüche, **dadurch gekennzeichnet, dass** an unterschiedlichen Orten und/oder zu unterschiedlichen Zeiten die charakteristischen Signale unterschiedlicher Fahrzeuge (1) nach einem der vorangehenden Ansprüche ermittelt werden und in einer Datenbank abgespeichert werden,
- dass für den Fall, dass zu einem späteren Zeitpunkt neuerlich ein charakteristisches Signal eines Fahrzeugs (1) ermittelt wird, dieses charakteristische Signal (C) mit den in der Datenbank abgespeicherten charakteristischen Signalen verglichen wird, und
- dass für den Fall, dass der Vergleich eine Übereinstimmung zwischen dem neuerlich ermittelten charakteristischen Signal und einem abgespeicherten charakteristischen Signal ergibt, festgestellt wird, dass die beiden charakteristischen Signale vom gleichen Fahrzeug stammen.

11. Verfahren nach einem der vorangehenden Ansprüche, **dadurch gekennzeichnet, dass** zur qualitativen Bestimmung der Ladungsverteilung innerhalb eines Fahrzeugs (1)
- das charakteristische Signal (Cᵤ) des Fahrzeugs ohne besondere Beladung ermittelt wird
- für das beladene Fahrzeug (1) neuerlich ein charakteristisches Signal (C_{L}) ermittelt wird, und
- aufgrund der Verstärkung oder Abschwächung charakteristischen Signals des C_{L} des beladenen Fahrzeugs gegenüber dem charakteristischen Signal Cᵤ des unbeladenen Fahrzeugs die Ladungsverteilung ermittelt wird durch ortsweise Bildung des Quotienten q(p) der beiden charakteristischen Signale, gemäß der Formel q(p) = C_{L}(p) / Cᵤ(p).

12. Verfahren nach einem der vorangehenden Ansprüche, **dadurch gekennzeichnet, dass** ein Maßwert für das Vorliegen eines kritischen Zustands ermittelt wird, indem im charakteristischen Signal nach Positionen (p*) gesucht wird, in denen die erste, zweite oder höhere Ableitung des Werts des Signals nach der Ausdehnungsrichtung (p) des jeweiligen Fahrzeugs (1) einen vorgegebenen Schwellenwert überschreitet, wobei der Maßwert eine hohe Wahrscheinlichkeit für das Vorliegen eines kritischen Zustands indiziert, wenn das charakteristische Signal an einzelnen Positionen Spitzen aufweist.

13. Verfahren nach einem der vorangehenden Ansprüche, wobei das Fahrzeug eine Zugmaschine (1a) und einen Anhänger umfasst,
**dadurch gekennzeichnet, dass**
- für zwei Fahrzeuge jeweils separate charakteristische Signale (Cₓ, C_{y}) ermittelt werden, wobei gegenüber jedem der charakteristischen Signale jeweils eine Referenzposition festgelegt wird,
- dass der Abstand zwischen den Referenzpositionen ermittelt wird, und
- dass für den Fall, dass der Abstand einen vorgegebenen Schwellenwert unterschreitet untersucht wird, ob sich im überlagerten Signal der beiden charakteristische Signale (Cₓ, C_{y}) eine einen Schwellenwert überschreitende Signalüberhöhung befindet und in diesem Fall das Auftreten eines Zusammenstoßes detektiert wird.

## Claims

1. Method for determining a characteristic signal for a vehicle (1) moving along a road (2),
a) wherein along the road (2) measured values for characterising vibrations or pressure changes are determined at a plurality of location points (M₁ ... M₁₀₀) arranged along the road (2) by means of an elongated acoustic sensor (3) in the form of a fibre optic cable which lies along the road (2) and is affected by the vibrations coming from the road (2),
wherein at predetermined time points
- a light pulse is emitted into the fibre optic cable,
- the light returning from the fibre optic cable is measured, wherein according to the time lag of the returning light the signal is assigned to a location point (M₁ ... M₁₀₀) along the road (2), and
- wherein the strength or phase of the returning light is used as a measurement value for characterising vibrations or pressure changes at the relevant location point (M₁ ... M₁₀₀),
b) wherein for a number of location points (M₁ ... M₁₀₀) along the road (2) and for a number of time points (t) based on the strength or phase of the measured returning light respectively a measured value (m(x, t)) is made available for characterising the vibration or a pressure change,
c) wherein a trajectory (x₀(t); t₀(x)) of the vehicle (1) is determined or predetermined with respect to the waypoints in time, wherein the trajectory (x₀(t); t₀(x)) indicates the location point (M₁ ... M₁₀₀) of a predetermined part of the vehicle (1) at each time point (t) within a time range (T),
d) wherein for location points (M₁ ... M₁₀₀) respectively separately
- a number of time windows (U) are predetermined in the region of the vehicle (1) or its trajectory (x₀(t); t₀(x)) at the respective location point (M₁ ... M₁₀₀),
- in each of the time windows of the location point (M₁ ... M₁₀₀) the signal energy is determined separately respectively within a predetermined frequency band and this signal energy is allocated to a time point (t) assigned to the time window (U), so that a discrete signal (d(x, t)) is available which assigns the associated signal energies to each location point (M₁ ... M₁₀₀) for individual time points,
e) the individual values of the discrete signal (d(x, t)) corresponding to the trajectory (x₀(t); t₀(x)) of the vehicle (1) are assigned to one another such that the values from the discrete signal (d(x, t)) originating from the same parts of the vehicle (1) are assigned to one another,
f) wherein the individual values of the discrete signal (d(x, t)) which are assigned to one another are aggregated over time and/or location, and a characteristic signal (C) is determined which is regarded as characteristic for the vehicle (1).

2. Method according to claim 1, **characterised in that** for determining the characteristic signal (C)
- a separate discrete location signal (dₜ(x)) is taken from the discrete signal (d(x, t)) for each time point,
- the individual discrete location signals (dₜ(x)) are shifted according to the trajectory (x₀(t)) in such a way that signal components originating from the same parts of the vehicle (1) each come to lie at the same location position (x), and
- the location signals (dₜ(x)) shifted in this way are aggregated by location point.

3. Method according to claim 1, **characterised in that** for determining the characteristic signal (C)
- a separate discrete time signal (dₓ(t)) is taken from the discrete signal (d(x, t)) for each location point (M₁ ... M₁₀₀),
- the individual discrete time signals (dₓ(t)) are shifted according to the trajectory and in the event of accelerations or decelerations of the vehicle (1) in the trajectory (x₀(t); t₀(x)) are equalised in such a way that signal components originating from the same parts of the vehicle (1) each fall on the same time point (t), and
- the time signals (dₓ(t)) shifted in this way are aggregated by time point and the result obtained in this way is used as a characteristic signal.

4. Method according to claim 3, **characterised in that** the discrete signals are shifted against one another according to the trajectory (x₀(t); t₀(x)) of the vehicle (1) such that
a) the support points of the respective time window are located at discrete equidistant times and equally fixed times in each location channel, and for shifting according to the trajectory (x₀(t); t₀(x)) the discrete time signals (dₓ(t)) are only shifted by integer multiples of the interval of these times, or
b) the individual location channels (M₁ ... M₁₀₀) are interpolated and then shifted.

5. Method according to any of the preceding claims, **characterised in that** the light pulses are emitted into the fibre optic cable (3) at a frequency between 100 Hz and 10 kHz.

6. Method according to any of the preceding claims, **characterised in that** for determining the trajectory (x₀(t)) of the start of the vehicle (1) on the road (2) for a number of location channels respectively the signal energies are determined at a plurality of time points within a specific time range within a specific frequency band or a plurality of specific frequency bands,
and **in that** the trajectory is determined within a time range and a location channel when the determined signal energy or the determined signal energies exceed a predetermined threshold,
wherein in particular the trajectory (x₀(t)) of the start or the end of the vehicle (1) is determined, **in that** for each location channel the respective earliest or latest time point is determined at which the signal energy exceeds or falls below a predetermined threshold.

7. Method according to any of the preceding claims, **characterised in that**
- for determining a characteristic signal measured values (m(x, t)) are used which have been recorded within a time range of less than 20 seconds, and/or
- **in that** characteristic signals are produced continuously at time intervals of between 0.5 and 10 seconds and/or comparisons are made between characteristic signals which were produced within less than 10 seconds.

8. Method according to any of the preceding claims, wherein the vehicle comprises a tractor (1a) and a trailer,
**characterised in that**
- a single characteristic signal is determined for the whole vehicle (1) at a time point at which the vehicle is intact and is in its normal state with a tractor (1a) and a trailer, and
- in the event that the characteristic signal of the vehicle (1) splits into two separate signals (Cx, Cy) at a later time point, the loss of the trailer (1b) is determined.

9. Method according to any of the preceding claims, wherein the vehicle comprises a tractor (1a) and a trailer (1b),
**characterised in that**
- for the tractor (1a) and the trailer (1b) respectively separate characteristic signals (Cx, Cy) are determined, wherein a reference position (Rx, Ry) is defined opposite each of the characteristic signals (Cx, Cy) respectively,
- **in that** the distance between the reference position of the characteristic signal of the tractor (1a) and the reference position of the characteristic signal of the trailer (1b) is determined at a time point as a reference distance at which the vehicle is intact, and
- **in that** the distance is determined again at a later time point, and in the event that the distance exceeds a predetermined threshold the loss of the trailer is determined.

10. Method according to any of the preceding claims, **characterised in that** at different locations and/or at different times the characteristic signals of different vehicles (1) are determined according to any of the preceding claims and are saved in a database,
- **in that** in the event that at a later time point a characteristic signal of a vehicle (1) is determined again, this characteristic signal (C) is compared with the characteristic signals saved in the database, and
- in the event that the comparison produces a match between the again determined characteristic signal and a saved characteristic signal, it is established that the two characteristic signals originate from the same vehicle.

11. Method according to any of the preceding claims, **characterised in that** for a qualitative determination of the load distribution with a vehicle (1)
- the characteristic signal (Cᵤ) of the vehicle is determined without special load,
- a characteristic signal (C_{L}) is determined again for the loaded vehicle (1), and
- the load distribution is determined on the basis of the amplification or attenuation of the characteristic signal of the C_{L} of the loaded vehicle in relation to the characteristic signal Cᵤ of the unloaded vehicle by forming the quotient q(p) of the two characteristic signals locally, according to the formula q(p) = C_{L}(p)/Cᵤ(p).

12. Method according to any of the preceding claims, **characterised in that** a measured value for the presence of a critical condition is determined **in that** a search is made in the characteristic signal for positions (p*) at which the first, second or higher derivation of the value of the signal according to the extension direction (p) of the respective vehicle (1) exceeds a predefined value, wherein the measured value indicates a high probability of a critical condition when the characteristic signal has peaks in individual positions.

13. Method according to any of the preceding claims, wherein the vehicle comprises a tractor (1a) and a trailer,
**characterised in that**
- separate characteristic signals (Cₓ, C_{y}) are determined for two vehicles respectively, wherein a reference position is determined opposite each of the characteristic signals,
- **in that** the distance between the reference positions is determined, and
- **in that** in the event that the distance falls below a predetermined threshold, it is investigated whether in the superimposed signal of the two characteristic signals (Cₓ, C_{y}) there is a signal increase exceeding a threshold and in this case the occurrence of a collision is detected.

## Revendications

1. Procédé de spécification d'un signal caractéristique pour un véhicule (1) se déplaçant le long d'une voie (2),
a) dans lequel le long de la voie (2) au moyen d'un capteur acoustique allongé (3) en forme de câble en fibre optique qui se trouve le long du véhicule (2) et est affecté par des secousses provenant de la voie (2), des valeurs de mesure de caractérisation de vibrations ou de modifications de pression au niveau d'une pluralité de points de localisation (M₁ ... M₁₀₀) disposés le long de la voie (2) sont spécifiées,
dans lequel à des moments prédéfinis
- respectivement une impulsion lumineuse est émise dans le câble en fibre optique,
- la lumière revenant du câble en fibre optique est mesurée, dans lequel le signal est associé à un point de localisation (M₁ ... M₁₀₀) le long de la voie (2) en fonction du retard temporel de la lumière revenant, et
- dans lequel l'intensité ou la phase de la lumière revenant sont utilisées en tant que valeur de mesure de caractérisation de vibrations ou de modifications de pression dans le point de localisation (M₁ ... M₁₀₀) concerné,
b) dans lequel pour une pluralité de points de localisation (M₁ ... M₁₀₀) le long de la voie (2) et pour une pluralité de moments (t) sur la base de l'intensité ou de la phase de la lumière revenant mesurée, respectivement une valeur de mesure (m(x, t)) de caractérisation de la vibration ou d'une modification de pression est mise à disposition,
c) dans lequel une trajectoire (x₀(t) ; t₀(x)) du véhicule (1) en ce qui concerne les points de cheminement dans le temps est déterminée ou prédéfinie, dans lequel la trajectoire (x₀(t) ; t₀(x)) indique le point de localisation (M₁ ... M₁₀₀) d'une partie prédéfinie du véhicule (1) à chaque moment (t) au sein d'une plage temporelle (T),
d) dans lequel pour des points de localisation (M₁ ... M₁₀₀) respectivement séparément
- dans la zone du véhicule (1) ou de sa trajectoire (x₀(t) ; t₀(x)) dans le point de localisation (M₁ ... M₁₀₀) respectif une pluralité de fenêtres temporelles (U) sont prédéfinies,
- dans chaque fenêtre temporelle du point de localisation (M₁ ... M₁₀₀) l'énergie de signal au sein d'une bande de fréquence prédéfinie est déterminée séparément respectivement, et cette énergie de signal est assignée à un moment (t) associé à la fenêtre temporelle (U), de sorte qu'un signal discret (d(x, t)) qui associe à chaque point de localisation (M₁ ... M₁₀₀) les énergies de signaux correspondantes pour des moments particuliers est à disposition,
e) les valeurs particulières du signal discret (d(x, t)) sont associées les unes aux autres conformément à la trajectoire (x₀(t) ; t₀(x)) du véhicule (1) de telle sorte que les valeurs provenant de mêmes parties du véhicule (1) issues du signal discret (d(x, t)) sont associées les unes aux autres,
f) dans lequel les valeurs particulières associées les unes aux autres du signal discret (d(x, t)) sont agrégées dans le temps et/ou dans la localisation et un signal caractéristique (C) est défini, qui est réputé caractéristique pour le véhicule (1).

2. Procédé selon la revendication 1, **caractérisé en ce que** pour la spécification du signal caractéristique (C)
- pour chaque point temporel respectivement un signal de localisation discret (dₜ(x)) séparé est retiré du signal discret (d(x, t)),
- les signaux de localisation discrets particuliers (dₜ(x)) sont déplacés conformément à la trajectoire (x₀(t)) de telle sorte que des fractions de signal provenant de mêmes parties du véhicule (1) viennent se superposer respectivement sur la même position de localisation (x), et
- les signaux de localisation (dₜ(x)) ainsi déplacés sont agrégés en fonction des points de localisation.

3. Procédé selon la revendication 1, **caractérisé en ce que** pour la spécification du signal caractéristique (C)
- pour chaque point temporel (M₁ ... M₁₀₀) respectivement un signal temporel discret séparé (dₓ(t)) est retiré du signal discret (d(x, t)),
- les signaux temporels discrets particuliers (dₓ(t)) sont déplacés conformément à la trajectoire et en présence d'accélérations ou de ralentissements du véhicule (1) sont corrigés dans la trajectoire (x₀(t) ; t₀(x)) de telle sorte que des fractions de signal provenant de mêmes parties du véhicule (1) se trouvent respectivement sur le même point temporel (t), et
- les signaux temporels (dₓ(t)) ainsi déplacés sont agrégés en termes de points temporels et le résultat ainsi obtenu est utilisé en tant que signal caractéristique.

4. Procédé selon la revendication 3, **caractérisé en ce que** les signaux discrets sont déplacés les uns par rapport aux autres conformément à la trajectoire (x₀(t) ; t₀(x)) du véhicule (1) de telle sorte que
a) les points d'appui de la fenêtre temporelle respective se trouvent au niveau de temps équidistants discrets et constatés de manière identique dans chaque canal de localisation et pour un déplacement conformément à la trajectoire (x₀(t) ; t₀(x)) les signaux temporels discrets (dₓ(t)) sont déplacés uniquement de multiples entiers de l'écart de ces temps, ou
b) les canaux de localisation particuliers (M₁ ... M₁₀₀) sont interpolés et ensuite déplacés.

5. Procédé selon l'une quelconque des revendications précédentes, **caractérisé en ce que** les impulsions lumineuses sont émises avec une fréquence entre 100 Hz et 10 kHz dans le câble en fibre optique (3).

6. Procédé selon l'une quelconque des revendications précédentes, **caractérisé en ce que** pour la détermination de la trajectoire (x₀(t)) du début du véhicule (1) au niveau de la voie (2) pour une pluralité de canaux de localisation respectivement les énergies de signaux sont déterminées dans une pluralité de points temporels au sein d'une plage temporelle définie au sein d'une bande de fréquence spécifiée ou de plusieurs bandes de fréquences spécifiées
et **en ce que** la trajectoire est constatée au sein d'une plage temporelle et d'un canal de localisation lorsque l'énergie de signal déterminée ou les énergies de signaux déterminées dépassent une valeur seuil prédéfinie,
dans lequel en particulier la trajectoire (x₀(t)) du début ou de la fin du véhicule (1) est déterminée en déterminant pour chaque canal de localisation le point temporel respectivement le plus précoce ou le plus tardif dans lequel l'énergie de signal dépasse ou n'atteint pas une valeur seuil prédéfinie.

7. Procédé selon l'une quelconque des revendications précédentes, **caractérisé en ce que**
- pour la spécification d'un signal caractéristique respectivement des valeurs de mesure (m(x, t)) sont utilisées qui ont été enregistrées au sein d'une plage temporelle inférieure à 20 secondes, et/ou
- **en ce que** des signaux caractéristiques sont générés courant dans des intervalles temporels entre 0,5 et 10 secondes et/ou **en ce que** des comparaisons sont réalisées entre des signaux caractéristiques qui ont été générés en moins de 10 secondes.

8. Procédé selon l'une quelconque des revendications précédentes, dans lequel le véhicule comprend un tracteur (1a) et une remorque,
**caractérisé en ce que**
- pour le véhicule complet (1) un signal caractéristique unique est déterminé à un moment auquel le véhicule est intact et présente son état normal avec un tracteur (1a) et une remorque, et
- **en ce que** dans le cas où le signal caractéristique du véhicule (1) se répartit à un moment ultérieur en deux signaux séparés l'un de l'autre (Cx, Cy), la perte de la remorque (1b) est constatée.

9. Procédé selon l'une quelconque des revendications précédentes, dans lequel le véhicule comprend un tracteur (1a) et une remorque (1b),
**caractérisé en ce que**
- pour le tracteur (1a) et la remorque (1b) respectivement des signaux caractéristiques séparés (Cx, Cy) sont déterminés, dans lequel par rapport à chacun des signaux caractéristiques (Cx, Cy) respectivement une position de référence (Rx, Ry) est constatée,
- **en ce que** l'écart entre la position de référence du signal caractéristique du tracteur (1a) et la position de référence du signal caractéristique de la remorque (1b) est déterminé en tant qu'écart de référence à un moment où le véhicule est intact, et
- **en ce que** l'écart est de nouveau déterminé à un moment ultérieur et dans le cas où l'écart dépasse une valeur seuil prédéfinie, la perte de la remorque est constatée.

10. Procédé selon l'une quelconque des revendications précédentes, **caractérisé en ce que**, au niveau de localisations différentes et/ou à des temps différents, les signaux caractéristiques de différents véhicules (1) sont déterminés selon l'une des revendications précédentes et mémorisés dans une base de données,
- dans le cas où à un moment ultérieur un signal caractéristique d'un véhicule (1) est de nouveau déterminé, ce signal caractéristique (C) est comparé aux signaux caractéristiques mémorisés dans la base de données, et
- dans le cas où la comparaison engendre une concordance entre le signal caractéristique de nouveau déterminé et un signal caractéristique mémorisé, il est constaté que les deux signaux caractéristiques sont originaires du même véhicule.

11. Procédé selon l'une quelconque des revendications précédentes, **caractérisé en ce que** pour une spécification qualitative de la répartition de chargement au sein d'un véhicule (1)
- le signal caractéristique (Cᵤ) du véhicule est déterminé sans chargement particulier
- pour le véhicule (1) chargé un signal caractéristique (C_{L}) est de nouveau déterminé, et
- en raison du renforcement ou de l'affaiblissement d'un signal caractéristique du C_{L} du véhicule chargé par rapport au signal caractéristique Cᵤ du véhicule non chargé la répartition de chargement est déterminée, par la formation en fonction de la localisation du quotient q(p) des deux signaux caractéristiques, selon la formule q(p) = C_{L}(p) / Cᵤ(p).

12. Procédé selon l'une quelconque des revendications précédentes, **caractérisé en ce qu'**une valeur de dimension pour la présence d'un état critique est déterminée en cherchant des positions (p*) dans le signal caractéristique, où la première, la deuxième ou une dérivation ultérieure de la valeur du signal selon la direction d'allongement (p) du véhicule (1) respectif dépasse une valeur seuil prédéfinie, dans lequel la valeur de dimension indexe une probabilité élevée pour la présence d'un état critique, lorsque le signal caractéristique présente des pointes au niveau de positions particulières.

13. Procédé selon l'une quelconque des revendications précédentes, dans lequel le véhicule comprend un tracteur (1a) et une remorque,
**caractérisé en ce que**
- pour deux véhicules respectivement des signaux caractéristiques séparés (Cₓ, C_{y}) sont déterminés, dans lequel par rapport à chacun des signaux caractéristiques respectivement une position de référence est constatée,
- **en ce que** l'écart entre les positions de référence est déterminé, et
- **en ce que** dans le cas où l'écart est inférieur à une valeur seuil prédéfinie il est recherché si un surhaussement de signal dépassant une valeur seuil se trouve dans le signal superposé des deux signaux caractéristiques (Cₓ, C_{y}) et dans ce cas l'apparition d'un choc est détectée.
